# EUROPEAN PATENT APPLICATION

(11) **EP 3 241 988 A1**
(43) Date of publication of application: **08.11.2017**
(21) Application number: 16168413.9
(22) Date of filing: 04.05.2016
(51) Int. Cl.: F01D 5/08, F01D 5/18, F01D 5/30, F01D 11/00

(54) **COOLING ARRANGEMENT OF A GAS TURBINE BLADE**

(71) Applicant: Siemens Aktiengesellschaft, 80333 München (DE)
(72) Inventor: Osborne, Mark, Harmston, Lincoln, LN5 9SL (GB); Overton, David, Lincoln, LN4 1ST (GB)
(74) Representative: Maier, Daniel Oliver

(57) **Abstract**

A gas turbine (10) comprising a system for cooling a blade (38) in a rotor (22), the blade (38) comprising:
- a root (122) for connecting the blade (38) to the rotor (22),
- an aerofoil (126) connected to the root (122),
- a cooling passage extending in the root (122) and in the aerofoil (126) for channelling a cooling medium inside the blade (38),
- the cooling passage (151) comprising an inlet portion (181) defining a seat for coupling with a plug (200) connecting the cooling passage (151) to a source of a cooling gas, the inlet portion (181) including at least an inclined contact surface (190) which in operation is subject to contact at least a curved surface (210) of the plug (210), the curved surface of the plug (210) being pushed towards the inclined contact surface (190) to form a seal for the effect of the centrifugal force caused by the rotation of the rotor (22). Moreover, corresponding blade, plug, and method of cooling a blade are also provided.

## Description

### Field of invention

The present invention relates to a system for cooling gas turbine blades, in particular a system for connecting the root of a gas turbine blade to a source of cooling gas.

### Art Background

In a gas turbine engine, air is pressurized in a compressor and mixed with fuel in a combustor for generating hot combustion gases. The hot gases are then channelled towards a gas turbine which transforms the energy from the hot gases into work for powering the compressor and other devices which converts power, for example an upstream fan in a typical aircraft turbofan engine application, or a generator in power generation application.
The gas turbine stages include stationary vanes which channel the combustion gases into a corresponding row of rotor blades extending radially outwardly from a supporting rotor disk. Each rotor blade typically comprises a lower root, for coupling the blade with the turbine rotor, and an aerofoil exposed to the combustion gases channelled through the vanes. Aerofoils may be designed and manufactured hollow in order to include a cooling circuit therein. The cooling gas which circulates inside the cooling circuits is typically bleed air from the compressor discharge, which is fed to the turbine blade via a plenum under the blade.
The flow rate of cooling air circulating in the blade cooling circuit needs to be controlled, as too much air reduces engine efficiency, whilst too little air leads to the blade overheating.
In known solutions, however, the flow of cooling air into the cooling circuits of a turbine blade is restricted by the cast form of the cooling feed passage within the blade, or by the permanently fixing (e.g. through welding or brazing) of a plate to the root of the blade, for connecting the cooling circuit inside the blade to a source of a cooling gas.
It is therefore desirable to provide a new and more flexible design for a gas turbine blade for coupling the blade with a cooling source.

### Summary of the Invention

It may be an object of the present invention to provide a blade for the rotor of a gas turbine including a cooling passage for efficiently cooling the blade, in particularly allowing to efficiently controlling the flow rate of a cooling gas inside the cooling passage.

It may be another object of the present invention to provide a blade for the rotor of a gas turbine including a coupling with a source of a cooling gas for efficiently cooling the blade, without the need of permanently fixing any connecting device to the blade.

It may be a further object of the present invention to provide a gas turbine including an efficient cooling system for the rotor blades, allowing the flow rate of the cooling gas which circulates inside the blades cooling passages to be efficiently controlled.

It may be a further object of the present invention to provide a method for cooling a gas turbine, allowing the flow rate of the cooling gas inside the blade cooling passages to be efficiently controlled.

In order to achieve the objects defined above, a blade for a gas turbine and a gas turbine including such a blade are provided in accordance to the independent claims. The dependent claims describe advantageous developments and modifications of the invention.

According to a first aspect of the present invention, a blade for a rotor of a gas turbine is provided. The blade comprises:
- a root for connecting the blade to a rotor of a gas turbine,
- an aerofoil connected to the root,
- a cooling passage extending in the root and in the aerofoil for channelling a cooling medium inside the blade. The cooling passage comprises an inlet portion opening at an external surface of the root. The inlet portion defines a seat for coupling with a plug connecting the cooling passage to a source of a cooling gas. The inlet portion includes at least a contact surface which in operation is subject to contact at least a curved surface of the plug. The contact surface is inclined with respect to a longitudinal axis of the blade.

According to a second aspect of the present invention, a plug for connecting the cooling passage inside the above described blade is provided. The plug includes at least a curved surface which in operation is subject to contact at least a contact surface of the inlet portion. The contact surface is inclined with respect to a longitudinal axis of the blade. The plug includes a through hole for connecting the cooling passage to the source of a cooling gas.

According to a third aspect of the present invention, gas turbine includes:
- a rotor including the above described blade, and
- the above described plug.
The inlet portion of the cooling passage of the blade is coupled to the plug in such a way that when the rotor rotates the curved surface of the plug (is pushed towards the inclined contact surface of the inlet portion, to form a seal between the plug and the inlet portion.

According to a fourth aspect of the present invention, a method of cooling a blade of a gas turbine is provided. The method includes the step of:
- providing a rotor having at least a blade as above described, the blade being coupled to the rotor in such a way that the contact surface of the inlet portion of the cooling passage is inclined with respect to a radial direction of the rotor,
- providing a plug as above described,
- coupling the plug to the inlet portion of the cooling passage of the blade, in such a way that when the rotor rotates the curved surface of the plug is pushed towards the inclined contact surface of the inlet portion, to form a seal between the plug to the inlet portion.

Under engine running conditions, the centrifugal force generated by the rotation of the rotor, pushes the curved surface of the plug onto the inclined contact surface of the seat formed in the blade. In all the aspects above defined, the present invention allows achieving an efficient cooling of the blade with an efficient sealing between the blade and a plug, which do not require any permanent fixing connection, e.g. brazing or welding. This also advantageously reduces the cost due to the inherent risk (high scrap rate) of a welding close to the root.
Further advantageously, the present invention provides a passage for the cooling gas, i.e. the through hole of the plug, which may be easily changed, in particular during the turbine, to adjust the cooling air flow in the cooling passage of the blade. In production, the blades could be air flow tested with the plug in place, and then changed out for a different restrictor size to achieve a nominal flow. In either case, this would improve efficiency and make the engine more competitive. This can be achieved without any modification to the blade itself.

According to an exemplary embodiment of the blade of the present invention, the cooling passage in the blade comprises a root portion communicating with the inlet portion. The inlet portion further includes:
- a first longitudinal end connected to the root portion and
- a second longitudinal end at the external surface of the root, the longitudinal radial end being bigger than the first longitudinal end, on a circumferential section of the blade. Advantageously, this defines a shape of the inlet portion of the blade which facilitates the contact and the coupling with the plug, in particular during operations, when the rotor is rotating. Particularly, the inclined contact surface of the inlet portion, extending between the first radial end and the second radial end, may be conical. More particularly, the contact surface is inclined with respect to the longitudinal axis of the blade of an angle comprised between 5 and 45 degrees.

According to another exemplary embodiment of the blade of present invention, the inlet portion includes at least a further contact surface extending between the first and the second radial ends along the longitudinal axis of the blade, in order to allow for tolerance stack-up between the plug and the inlet portion.
This variant permits to apply the present invention to blades where a conical inlet portion of the cooling passage is not practicable, e.g. due to geometry of root form or cooling passages, or when the blade casting already exists and cannot be machined. The concept may be adjusted to different shaped plugs.

According to an exemplary embodiment of the plug of the present invention, the curved surface of the plug contacts the contact surface of the inlet portion along a contact circumference. This means that in sectional view the plug contacts the contact surface of the inlet portion in two points, which are symmetrical with respect to an axis of symmetry of the plug and of the seat in the inlet portion on the blade.
Particularly, the ratio between the diameter of the contact circumference and a radius of the curved surface may be comprised between 0,5 and 2. In the latter case this means that the curved surface of the plug includes at least a spherical portion. In the other cases, the curved surface may be a toroidal surface developed around an axis of symmetry of the plug.

According to another exemplary embodiment of the plug of the present invention, the plug includes a plurality of through holes for connecting the cooling passage to the source of a cooling gas. This permits the coupling with blades where a conical inlet portion of the cooling passage is not practicable, and where the inlet portion is connected to a plurality of root portions of blade cooling passages.

According to yet another exemplary embodiment of the plug of the present invention, the plug includes:
- a first base which in operation is subject to face the first radial end of the inlet portion and
- a second base having a shape matching the shape of the external surface of the root at the second radial end of the inlet portion. Advantageously, the shape of the second base retains the plug inside the seat in the inlet portion of the cooling passage, when the rotor is not rotating.

It has to be noted that embodiments of the invention have been described with reference to different subject matters. In particular, some embodiments have been described with reference to method type claims whereas other embodiments have been described with reference to apparatus (blade, plug und turbine) type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 is a partial axial sectional view of a gas turbine according to the present invention, including a rotor blade according to the present invention,
FIG. 2 shows a longitudinal sectional view of a gas turbine blade according to the present invention,
FIG. 3 shows a circumferential sectional view of a portion of the blade in Fig. 2, taken along the sectional line III-III in Fig. 2,
FIG. 4 shows a more detailed view of the sectional view of Fig. 3,
FIG. 5 shows a longitudinal sectional view of a portion of another embodiment of a gas turbine blade according to the present invention,
FIG. 6 shows a circumferential sectional view of a portion of the blade in Fig. 5, taken along the sectional line VI-VI in Fig. 5.

### Detailed Description

Hereinafter, above-mentioned and other features of the present invention are described in details. Various embodiments are described with reference to the drawings, wherein the same reference numerals are used to refer to the same elements throughout. The illustrated embodiments are intended to explain, and not to limit the invention.

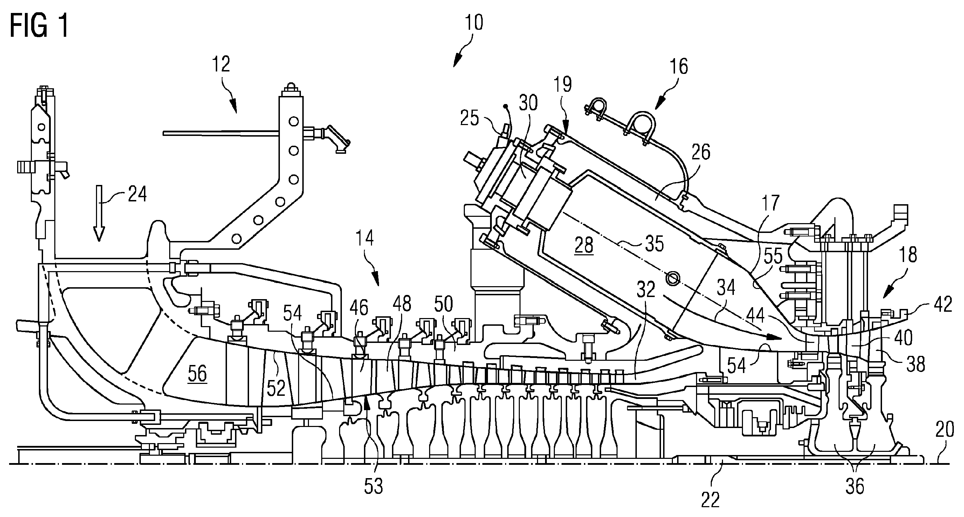

FIG. 1 shows an example of a gas turbine engine 10 in a sectional view. The gas turbine engine 10 comprises, in flow series, an inlet 12, a compressor section 14, a combustor section 16 and a turbine section 18 which are generally arranged in flow series and generally about and in the direction of a longitudinal or rotational axis 20. The gas turbine engine 10 further comprises a shaft 22 which is rotatable about the rotational axis 20 and which extends longitudinally through the gas turbine engine 10. The shaft 22 drivingly connects the turbine section 18 to the compressor section 14.
In operation of the gas turbine engine 10, air 24, which is taken in through the air inlet 12 is compressed by the compressor section 14 and delivered to the combustion section or burner section 16. The burner section 16 comprises a burner plenum 26, one or more combustion chambers 28 and at least one burner 30 fixed to each combustion chamber 28. The combustion chambers 28 and the burners 30 are located inside the burner plenum 26. The compressed air passing through the compressor 14 enters a diffuser 32 and is discharged from the diffuser 32 into the burner plenum 26 from where a portion of the air enters the burner 30 and is mixed with a gaseous or liquid fuel. The air/fuel mixture is then burned and the combustion gas 34 or working gas from the combustion is channelled through the combustion chamber 28 to the turbine section 18 via a transition duct 17.
This exemplary gas turbine engine 10 has a cannular combustor section arrangement 16, which is constituted by an annular array of combustor cans 19 each having the burner 30 and the combustion chamber 28, the transition duct 17 has a generally circular inlet that interfaces with the combustor chamber 28 and an outlet in the form of an annular segment. An annular array of transition duct outlets form an annulus for channelling the combustion gases to the turbine 18.
The turbine section 18 comprises a number of blade carrying discs 36 attached to the shaft 22. In the present example, each of the two discs 36 carries an annular array of turbine blades 38. However, the number of blade carrying discs could be different, i.e. only one disc or more than two discs. In addition, guiding vanes 40, which are fixed to a stator 42 of the gas turbine engine 10, are disposed between the stages of annular arrays of turbine blades 38. Between the exit of the combustion chamber 28 and the leading turbine blades 38 inlet guiding vanes 44 are provided and turn the flow of working gas onto the turbine blades 38.
The combustion gas from the combustion chamber 28 enters the turbine section 18 and drives the turbine blades 38 which in turn rotate the shaft 22. The guiding vanes 40, 44 serve to optimise the angle of the combustion or working gas on the turbine blades 38.
The turbine section 18 drives the compressor section 14. The compressor section 14 comprises an axial series of vane stages 46 and rotor blade stages 48. The rotor blade stages 48 comprise a rotor disc supporting an annular array of blades. The compressor section 14 also comprises a casing 50 that surrounds the rotor stages and supports the vane stages 48. The guide vane stages include an annular array of radially extending vanes that are mounted to the casing 50. The vanes are provided to present gas flow at an optimal angle for the blades at a given engine operational point. Some of the guide vane stages have variable vanes, where the angle of the vanes, about their own longitudinal axis, can be adjusted for angle according to air flow characteristics that can occur at different engine operations conditions.
The casing 50 defines a radially outer surface 52 of the passage 56 of the compressor 14. A radially inner surface 54 of the passage 56 is at least partly defined by a rotor drum 53 of the rotor which is partly defined by the annular array of blades 48.

The present invention is described with reference to the above exemplary turbine engine having a single shaft or spool connecting a single, multi-stage compressor and a single, one or more stage turbine. However, it should be appreciated that the present invention is equally applicable to two or three shaft engines and which can be used for industrial, aero or marine applications.
The terms upstream and downstream refer to the flow direction of the airflow and/or working gas flow through the engine unless otherwise stated. The terms forward and rearward refer to the general flow of gas through the engine. The terms axial, radial and circumferential are made with reference to the rotational axis 20 of the gas turbine engine 10.

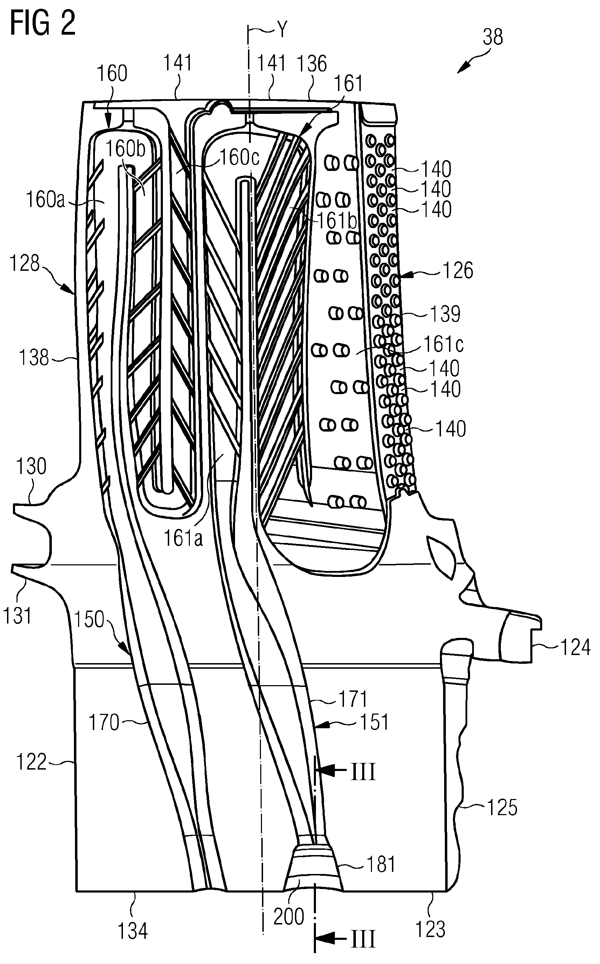

With reference to **Fig. 2** an embodiment the turbine blade 38 according to the present invention is shown.
The rotor blade 38 comprises:
- a root 122 for connecting the blade 38 to the disk 36 of the rotor 22, by means of a plurality of serrations 125 provided on an external surface 123 of the root 122 for engaging correspondent mating serrations (not shown) in the disk 36,
- a platform 124 having a lower surface 131, from which the root 122 extends and an upper surface 130 opposite to the lower surface 131,
- an hollow aerofoil 126 extending from the upper surface 130 of the platform 124.
The turbine blade 38 extends from a base surface 134 up to an aerofoil tip 136 along a longitudinal axis Y. When the turbine blade 38 is connected to the disk 36, the longitudinal axis Y of the blade 38 is aligned with the radial direction of the gas turbine engine 10.

The aerofoil 126 has an external surface 128, axially extending between a leading edge 138 and a trailing edge 139. On the external surface 128 a first plurality of outlet cooling holes 140 are provided in a portion of the hollow aerofoil 126 including the trailing edge 135.
A second plurality of outlet cooling holes 141 are provided on the aerofoil tip 136.
The turbine blade 38 includes one or more inner cooling passages (two cooling passages 150, 151 are represents in Fig. 2) for channelling a cooling medium (for example compressed air from the compressor section 14) up to the first and second pluralities of outlet cooling holes 140, 141.
Each of the cooling passages 150, 151 comprises a respective aerofoil portion 160, 161, provided inside the hollow aerofoil 126, and a respective root portion 170, 171, provided inside the root 122.
The first aerofoil portion 160 of the first cooling passage 150 connects the respective first root portion 170 to the second plurality of outlet cooling holes 141. The first aerofoil portion 160 comprises a plurality of cavities (three cavities 160a, 160b, 160c) disposed in series between the first root portion 170 and the second plurality of outlet cooling holes 141. Each of the cavities 160a, 160b, 160c extends radially between the platform 124 and the tip 136 of the aerofoil 126.
The second aerofoil portion 161 of the second cooling passage 151 connects the respective second root portion 171 to the first and second pluralities of outlet cooling holes 140, 141. The second aerofoil portion 161 comprises a plurality of cavities (three cavities 161a, 161b, 161c) disposed in series between the second root portion 171 and the pluralities of outlet cooling holes 140, 141. Each of the cavities 161a, 161b, 161c extends radially between the platform 124 and the tip 136 of the aerofoil 126. The structure of the aerofoil portions 160, 161 of the cooling passages 150, 151 and, in particular, of the cavities 160a, 160b, 160c, 161a, 161b, 161c are not specifically object of the present invention and are therefore not described in further detail.
The root portions 170, 171 provide a connection between the aerofoil portions 160, 161 and a source (not shown) of the cooling medium.

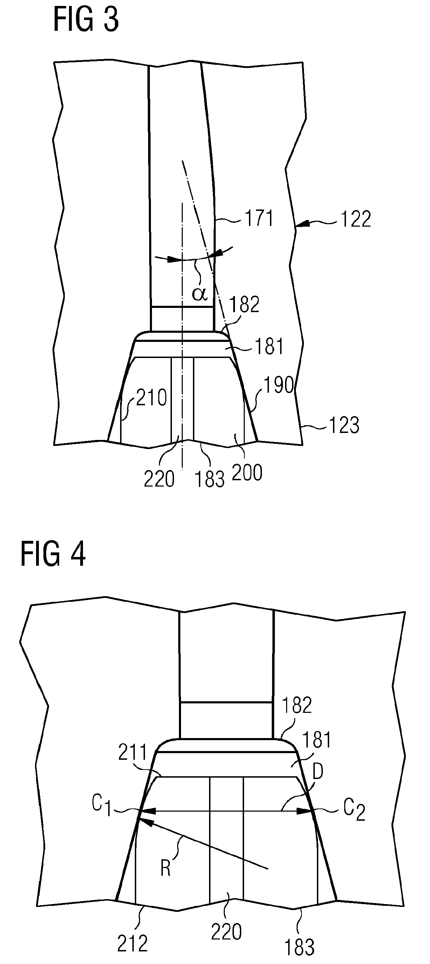

With reference to the embodiment of Figs. 2 to 4, the cooling passage 151 comprises an inlet portion 181 opening at the external surface 123 of the root 122. The inlet portion 181 defining a seat for coupling with a plug 200 connecting the cooling passage 151 to a source of a cooling gas, for example a further cooling passage (not represented) provided on the disk 36 of the rotor 22. The plug 200 connects such cooling passage provided on the disk 36 with the root portion 171 of the cooling passage 151 by means of a through hole 220 provided on the plug 200. In operation, when the plug 200 is coupled to the inlet portion 181, the through hole 220 extends along the radial direction of the gas turbine engine 10. The diameter of the through hole 220 determines the cooling mass flow rate flowing in the cooling passage 151.
No permanent fixing means, for example welding or brazing, is provided between the inlet portion 181 and the plug 200.
The inlet portion 181 includes a lateral contact surface 190 which in operation is subject to contact a curved surface 210 of the plug 210. The contact surface 190 extends longitudinally in the blade 38 between a first longitudinal end 182 and a second longitudinal end 183 of the inlet portion 181. The first radial end 182 connects the inlet portion 181 to the root portion 171. The second radial end 183 is provided along the external surface 123 of the root 122 and is bigger than the first radial end 182, for example when measured on a circumferential section of the blade 38 (any of the sections of **Figs. 3** and **4**).
The contact surface 190 is inclined with respect to the longitudinal axis Y of the blade 38. In particular, the inclined contact surface 190 of the inlet portion 181 is conical.

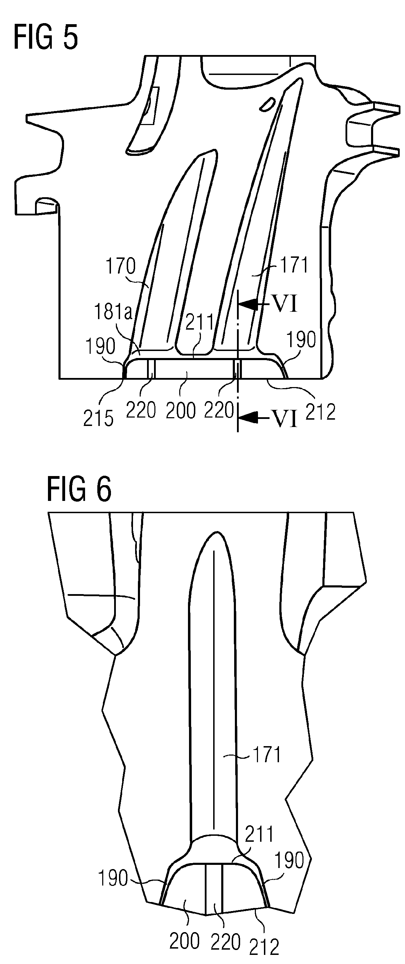

According to other different embodiment (for example the embodiments of **Figs. 5** and **6**) the contact surface 190 has a tapered, but not conical shape.
The contact surface 190 is inclined with respect to the longitudinal axis Y of the blade 38 of an inclination angle α greater than zero and lower than 90 degrees. In particular, the inclination angle α may be comprised between 5 and 45 degrees.

With reference to the embodiment of **Figs. 5** and **6**, an inlet portion 181a having an elongated shape (along the longitudinal sectional view of **Fig. 5**) is provided. The inlet portion 181a communicates with both the root portions 170, 171 of two cooling passages 150, 151. The inlet portion 181a includes three tapered contact surface 190 and a further contact surface 191 extending between the first and the second radial ends 182, 183 along the longitudinal axis Y of the blade 38. The shape of the inlet portion 181a and in particular the longitudinal contact surface 191 allows for tolerance stack-up between the plug 200 and the inlet portion 181a, when the inlet portion latter is not symmetric about an axis, like in the embodiment of **Figs. 2** to **4**.

With reference to all the embodiments of **Figs. 2** to **6**, the plug 200 includes a first base 211 which in operation is subject to face the first radial end 182 of the inlet portion 181, 181a and a second base 212 having a shape matching the shape of the external surface 123 of the root 122 at the second radial end 183 of the inlet portion 181. In operation, when the plug 200 is coupled to the inlet portion 181, 181a, the first and second bases 211, 212 are distanced along the radial direction of the gas turbine engine 10. The length of the second base 212 is bigger than the length of the first base 211, measured on a section of the blade 38 (for example any of the sections of **Figs. 2** to **6**). The shape of the second base 212, matching the external surface 123 of the root 122, retains the plug 200 inside the seat in the inlet portion 181, 181a of the cooling passage in the blade 38, when the rotor 22 is not rotating.

With reference to the embodiment of **Figs. 2** to **4**, the curved surface 210 is a toroidal surface with respect to an axis of symmetry, which in operation is aligned to the axis of the inlet portion 181. The curved surface 210 of the plug 200 contacts the conical contact surface 190 of the inlet portion 181 along a contact circumference (represented in the sectional view of the **Figs. 3** and **4** by two points C1, C2). The shape of the curved surface 210 is such, that the ratio D/R between the diameter D of the contact circumference (i.e. the distance between the two points C1, C2) and a radius R of the curved surface 210, for example measured in the circumferential section of **Figs. 3** and **4** is lower than 2. More particularly the ratio D/R is comprised between 0,5 and 2. A value of the ratio D/R corresponding to 2 defines a spherical curved surface 210, at least in a portion thereof.

With reference to the embodiment of **Figs. 5** and **6**, the plug 200 has a shape corresponding to the inlet portion 181a, i.e. the plug 200 includes also a surface 215, which in operation, when the plug 200 is coupled to the inlet portion 181a, is oriented radially. In such embodiment, the plug 200 includes a plurality of through holes 220 (two through holes 220) for respectively connecting each of the root portion 170, 171 of the cooling passages 150, 151 to the source of a cooling gas.

With reference to all the embodiments of the present invention, a method of cooling the blade 38 includes a first step providing a blade 38 having the cooling passage 151. The cooling passage 151 may be provided when casting the blade 38 or in a later step, for example through drilling or milling. In a second step of the method, the plug 200 is provided, choosing a convenient shape of the through hole(s) 220, in order that, when the plug 200 is connected to a source of a cooling gas, for example a passage in the rotor disk 36, the desired cooling flow rate is achieved.
In a third step of the method, the plug 200 is coupled to the inlet portion 181, 181a of the cooling passage 151 of the blade 38, with the first base 211 facing the first radial end 182 of the cooling passage 151 and the curved surface 210 facing the inclined contact surface 190. When the rotor 22 rotates the curved surface 210 of the plug 200 is pushed towards the inclined contact surface 190 of the inlet portion 181, 181a, to form a seal between the plug 200 and the inlet portion 181, 181a. No permanent fixing means is in any embodiment provided between the inlet portion 181, 181a and the plug 200.

## Claims

1. A blade (38) for a rotor (22) of a gas turbine (10) comprising:
- a root (122) for connecting the blade (38) to a rotor (22) of a gas turbine (10),
- an aerofoil (126) connected to the root (122),
- a cooling passage extending in the root (122) and in the aerofoil (126) for channelling a cooling medium inside the blade (38),
- the cooling passage (151) comprising an inlet portion (181, 181a) opening at an external surface (123) of the root (122), the inlet portion (181, 181a) defining a seat for coupling with a plug (200) connecting the cooling passage (151) to a source of a cooling gas, the inlet portion (181, 181a) including at least a contact surface (190) which in operation is subject to contact at least a curved surface (210) of the plug (210), the contact surface (190) being inclined with respect to a longitudinal axis (Y) of the blade (38).

2. The blade (38) according to claim 1, wherein the cooling passage (151) comprises a root portion (171) communicating with the inlet portion (181, 181a) and the inlet portion (181, 181a) includes:
- a first longitudinal end (182) connected to the root portion (171) and
- a second longitudinal end (183) at the external surface (123) of the root (122), the second longitudinal end (183) being bigger than the first longitudinal end (182), on a circumferential section of the blade (38).

3. The blade (38) according to claim 1 or 2, wherein the inclined contact surface (190) of the inlet portion (181) is conical.

4. The blade (38) according to claim 3, wherein the contact surface (190) is inclined with respect to the longitudinal axis (Y) of the blade (38) of an inclination angle (α) comprised between 5 and 45 degrees.

5. The blade (38) according to claim 2, wherein the inlet portion (181a) includes at least a further contact surface (191) extending between the first and the second radial ends (182, 183) along the longitudinal axis (Y) of the blade (38), in order to allow for tolerance stack-up between the plug (200) and the inlet portion (181a).

6. A plug (200) for connecting a cooling passage (151) inside a blade (38) for a rotor (22) of a gas turbine (10) to a source of a gas cooling, the blade (38) comprising:
- a root (122) for connecting the blade (38) to a rotor (22) of a gas turbine (10),
- an aerofoil (126) connected to the root (122),
- the cooling passage (151) extending in the root (122) and in the aerofoil (126) for channelling a cooling medium inside the blade (38),
- the cooling passage (151) comprising an inlet portion (181, 181a) opening at an external surface (123) of the root (122), the inlet portion (181, 181a) defining a seat for coupling with the plug (200), the plug (200) including at least a curved surface (210) which in operation is subject to contact at least a contact surface (190) of the inlet portion (181, 181a), the contact surface (190) being inclined with respect to a longitudinal axis (Y) of the blade (38), the plug (200) including a through hole (220) for connecting the cooling passage (151) to the source of a cooling gas.

7. The plug (200) according to claim 6, wherein in operation the curved surface (210) of the plug (200) contacts the contact surface (190) of the inlet portion (181, 181a) along a contact circumference (C1, C2).

8. The plug (200) according to claim 7, wherein the ratio (D/R) between the diameter (D) of the contact circumference (C1, C2) and a radius (R) of the curved surface (210) is comprised between 0,5 and 2.

9. The plug (200) according to any of the claims 6 to 8, wherein the curved surface (210) is a toroidal surface.

10. The plug (200) according to any of the claims 6 to 9, wherein the curved surface (210) includes at least a spherical portion.

11. The plug (200) according to any of the claims 6 to 10, wherein the plug (200) includes a plurality of through holes (220) for connecting the cooling passage (151) to the source of a cooling gas.

12. The plug (200) according to any of the claims 6 to 11, further including:
- a first base (211) which in operation is subject to face the first radial end (182) of the inlet portion (181, 181a) and
- a second base (212) having a shape matching the shape of the external surface (123) of the root (122) at the second radial end (183) of the inlet portion (181, 181a).

13. A gas turbine (10) including:
- a rotor (22) including at least a blade (38) according to any of the claims 1 to 4, the blade (38) being coupled to the rotor (22) in such a way that the contact surface (190) of the inlet portion (181, 181a) of the cooling passage (151) is inclined with respect to a radial direction of the rotor (22) ,
- a plug (200) according to any of the claims 5 to 10,
the inlet portion (181, 181a) of the cooling passage (151) of the blade (38) being coupled to the plug (200) in such a way that when the rotor (22) rotates the curved surface of the plug (210) is pushed towards the inclined contact surface (190) of the inlet portion (181, 181a), to form a seal between the plug (200) and the inlet portion (181, 181a).

14. A gas turbine (10) according to claim 13, wherein no permanent fixing means is provided between the inlet portion (181, 181a) and the plug (200).

15. A method of cooling a blade (38) of a gas turbine (10) including the step of:
- providing a rotor (22) having at least a blade (38) according to any of the claims 1 to 4, the blade (38) being coupled to the rotor (22) in such a way that the contact surface (190) of the inlet portion (181, 181a) of the cooling passage (151) is inclined with respect to a radial direction of the rotor (22),
- providing a plug (200) according to any of the claims 5 to 10,
- coupling the plug (200) to the inlet portion (181, 181a) of the cooling passage (151) of the blade (38), in such a way that when the rotor (22) rotates the curved surface (210) of the plug (200) is pushed towards the inclined contact surface (190) of the inlet portion (181, 181a), to form a seal between the plug (200) and the inlet portion (181, 181a).
